# EUROPÄISCHE PATENTANMELDUNG

(11) **EP 3 493 171 A1**
(43) Veröffentlichungstag der Anmeldung: **05.06.2019**
(21) Anmeldenummer: 18209135.5
(22) Anmeldetag: 29.11.2018
(51) Int. Cl.: G08B 13/196, H04N 7/18, G06K 9/00

(54) **DETEKTION VON AGGRESSIVEM VERHALTEN IN ÖFFENTLICHEN TRANSPORTMITTELN**

(30) Priorität: 04.12.2017 DE 102017221818
(71) Anmelder: Siemens Mobility GmbH, 81739 München (DE)
(72) Erfinder: Ketabdar, Hamed, 10707 Berlin (DE)

(57) **Zusammenfassung**

Es wird ein Verfahren zum automatisierten Detektieren von aggressivem Verhalten in einem Überwachungsbereich beschrieben. Bei dem Verfahren werden Videodaten (VD) von dem Überwachungsbereich automatisiert erfasst. Die Videodaten (VD) werden nach einem Muster schneller Bewegung durchsucht. Außerdem erfolgt ein automatisiertes Erfassen von akustischen Informationen (AD) von dem Überwachungsbereich. Schließlich wird automatisiert ermittelt, ob ein aggressives Verhalten vorliegt, auf Basis einer Kombination eines Vergleichsergebnisses (ED₂) der akustischen Informationen und des Ergebnisses der Musterdetektion in den Videodaten (ED₁). Es wird zudem ein Alarmierungsverfahren beschreiben. Es wird auch ein Überwachungssystem (10) beschrieben. Ferner wird ein Alarmsystem beschrieben.

## Beschreibung

Die Erfindung betrifft ein Verfahren zum automatisierten Detektieren von aggressivem Verhalten in einem Überwachungsbereich. Zudem betrifft die Erfindung ein Alarmierungsverfahren. Weiterhin betrifft die Erfindung ein Überwachungssystem. Überdies betrifft die Erfindung ein Alarmsystem.

In unterschiedlichen Arten von öffentlichen Verkehrsmitteln ist häufig aggressives Verhalten anzutreffen. Aggressives Verhalten kann sowohl die Sicherheit von Fahrgästen gefährden als auch gegen die genutzten Fahrzeuge gerichtet sein. Mit Hilfe einer automatisierten Detektion von aggressivem Verhalten oder zumindest verdächtigem Verhalten kann in öffentlichen Verkehrsmitteln die Sicherheit verbessert werden.

Ein solches System kann den Zugbetreiber oder Notdienste, wie zum Beispiel die Polizei oder medizinische Dienste, über das Auftreten von aggressivem Verhalten, welches Risiken für Passiere und Fahrzeuge mit sich bringen kann, informieren.

Herkömmlich wird aggressives Benehmen durch mitreisende Passagiere oder Betriebspersonal erkannt und gemeldet. Solche herkömmlichen Überwachungsverfahren können zusätzliche Kosten verursachen, wenn zum Beispiel zusätzlich Sicherheitspersonal zur Überwachung eingestellt werden muss. Weiterhin gibt es Situationen, in denen aggressives Verhalten nicht von anderen Passagieren erkannt werden kann, weil zum Beispiel ein Wagen, in dem sich der Vorfall ereignet, fast leer ist.

Hin und wieder werden auch Sicherheitskameras verwendet, um Aggression innerhalb öffentlicher Verkehrsmittel zu erkennen. Jedoch muss die Überwachung durch Personen erfolgen, was zusätzliche personelle Ressourcen erfordert. In manchen Ländern ist aufgrund von persönlichkeitsrechtlichen Bestimmungen die Überwachung mit Hilfe von Sicherheitspersonal nur sehr eingeschränkt möglich.

Es gibt auch akustische Methoden, um Aggression zu detektieren. Dabei werden mit Hilfe von Mikrofonen Signaturen der Aggression im akustischen Spektrum detektiert. Solche Systeme können dazu dienen, automatisiert Aggression zu erkennen, jedoch bringen sie ein großes Maß an falschem Alarm mit sich. Beispielsweise können unterschiedliche Quellen für akustisches Rauschen eine falsche Detektion von Aggression auslösen.

Es besteht also die Aufgabe, ein Verfahren und eine Vorrichtung zu entwickeln, mit denen aggressives Verhalten sicher erkannt werden kann.

Diese Aufgabe wird durch ein Verfahren zum automatisierten Detektieren von aggressivem Verhalten in einem Überwachungsbereich gemäß Patentanspruch 1, ein Alarmierungsverfahren gemäß Patentanspruch 8, ein Überwachungssystem gemäß Patentanspruch 9 und ein Alarmsystem gemäß Patentanspruch 10 gelöst.

Bei dem erfindungsgemäßen Verfahren zum automatisierten Detektieren von aggressivem Verhalten in einem Überwachungsbereich werden automatisiert Videodaten von dem Überwachungsbereich erfasst. Ein solcher Überwachungsbereich kann zum Beispiel ein Fahrgastbereich bzw. allgemein ein Innenbereich eines öffentlichen Verkehrsmittels, wie zum Beispiel ein Schienenverkehrsmittel, sein. Die Videodaten werden nach einem Muster schneller Bewegung, vorzugsweise schneller Bewegung von Personen, durchsucht. Solche schnellen Bewegungen können auf aggressives Verhalten von Personen in dem Überwachungsbereich hindeuten. Weiterhin erfolgt ein automatisiertes Erfassen von akustischen Informationen von dem Überwachungsbereich. Zur akustischen Aufnahme können zum Beispiel Mikrofone in oder an dem Überwachungsbereich installiert sein. Schließlich wird automatisiert ermittelt, ob ein aggressives Verhalten vorliegt, auf Basis einer Kombination eines Vergleichsergebnisses der akustischen Informationen und des Ergebnisses der Musterdetektion in den Videodaten. Bei dem automatisierten Ermitteln, ob ein aggressives Verhalten vorliegt, wird ein Frequenzbereich des Frequenzspektrums aus den Audiodaten extrahiert und mit einem Signaturmodell verglichen.

Vorteilhaft gehen zusätzlich zu den Bildinformationen auch Audiodaten in die Detektion einer Aggression ein. Werden schnelle Bewegungen in den Bilddaten erkannt, so deuten diese zwar auf eine Aggression hin, es kann jedoch auch andere Ursachen für ein derartiges Phänomen geben. Indem auch die Audiodaten mit in die Auswertung einfließen, können falschpositive Ergebnisse auf Basis von erkannten schnellen Bewegungen vermieden oder zumindest in ihrer Anzahl reduziert werden. Vorteilhaft wird dabei der Frequenzbereich extrahiert, in dem akustische Daten, welche aggressivem Verhalten zuzuordnen sind, sich befinden.

Bei dem erfindungsgemäßen Alarmierungsverfahren wird das erfindungsgemäße Verfahren zum automatisierten Detektieren von aggressivem Verhalten in einem Überwachungsbereich durchgeführt. Weiterhin erfolgt ein automatisiertes Auslösen eines Alarms für den Fall, dass eine Notsituation detektiert wurde.

Das erfindungsgemäße Alarmierungsverfahren teilt die Vorteile des erfindungsgemäßen Verfahrens zum automatisierten Detektieren von aggressivem Verhalten in einem Überwachungsbereich.

Das erfindungsgemäße Überwachungssystem umfasst eine Videoaufnahmeeinheit zum automatisierten Erfassen von Videodaten von dem Überwachungsbereich. Zudem umfasst das erfindungsgemäße Überwachungssystem eine Sucheinheit zum Durchsuchen der Videodaten nach einem Muster schneller Bewegung. Weiterhin ist Teil des erfindungsgemäßen Überwachungssystems eine akustische Sensoreinheit zum automatisierten Erfassen von akustischen Informationen von dem Überwachungsbereich. Überdies weist das erfindungsgemäße Überwachungssystem eine Ermittlungseinheit zum automatisierten Ermitteln auf, ob ein aggressives Verhalten vorliegt, auf Basis einer Kombination eines Vergleichsergebnisses der akustischen Informationen, wobei ein Frequenzbereich (SPD) des Frequenzspektrums der Audiodaten (AD) extrahiert und mit einem Signaturmodell für aggressives Verhalten verglichen wird, und des Ergebnisses der Musterdetektion in den Videodaten. Das erfindungsgemäße Überwachungssystem teilt die Vorteile des erfindungsgemäßen Verfahrens zum automatisierten Detektieren von aggressivem Verhalten in einem Überwachungsbereich.

Das erfindungsgemäße Alarmsystem umfasst das erfindungsgemäße Überwachungssystem sowie eine Alarmierungseinheit zum automatisierten Auslösen eines Alarms in Abhängigkeit von einem von dem Überwachungssystem detektierten aggressiven Verhalten. Das erfindungsgemäße Alarmsystem teilt die Vorteile des erfindungsgemäßen Überwachungssystems.

Einige Komponenten des erfindungsgemäßen Überwachungssystems können nach Ergänzung eines akustischen Sensors und einer Videokamera zum überwiegenden Teil in Form von Softwarekomponenten ausgebildet sein. Dies betrifft insbesondere Teile der Sucheinheit und der Ermittlungseinheit. Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher zur Überwachung eines Bereichs vorhandene Rechnersysteme nach einer eventuellen Ergänzung durch zusätzliche Hardwareelemente, wie zum Beispiel der akustischen Sensoreinheit und der Videoaufnahmeeinheit, auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung eines solchen Rechnersystems ladbar ist, mit Programmabschnitten, um alle Schritte des erfindungsgemäßen Verfahrens auszuführen, wenn das Computerprogramm in dem Rechnersystem ausgeführt wird.

Ein solches Computerprogrammprodukt kann neben dem Computerprogramm gegebenenfalls zusätzliche Bestandteile, wie z.B. eine Dokumentation und/oder zusätzliche Komponenten, auch Hardware-Komponenten, wie z.B. Hardware-Schlüssel (Dongles etc.) zur Nutzung der Software, umfassen

Zum Transport zur Speichereinrichtung des Rechnersystems und/oder zur Speicherung an dem Rechnersystem kann ein computerlesbares Medium, beispielsweise ein Memorystick, eine Festplatte oder ein sonstiger transportabler oder fest eingebauter Datenträger dienen, auf welchem die von einer Rechnereinheit einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung auch die verschiedenen Merkmale unterschiedlicher Ausführungsbeispiele und Ansprüche auch zu neuen Ausführungsbeispielen kombiniert werden.

In einer Ausgestaltung des erfindungsgemäßen Verfahrens zum automatisierten Detektieren von aggressivem Verhalten in einem Überwachungsbereich umfasst das automatisierte Ermitteln, ob ein aggressives Verhalten vorliegt, die Schritte:
- für den Fall, dass in den Videodaten ein Muster schneller Bewegung gefunden wurde, Vergleichen des Sonagramms der akustischen Informationen mit einem Signaturmodell für Aggression,
- Detektieren eines aggressiven Verhaltens, für den Fall, dass der Vergleich des Sonagramms mit dem Signaturmodell ein positives Ergebnis aufweist.

Aus einem Sonagramm, auch Spektrogramm genannt, das die akustischen Eigenschaften der Laute abbildet, kann man die physikalischen Merkmale der Laute entnehmen und diese nach diesen Merkmalen klassifizieren. Vorteilhaft müssen die akustischen Informationen nur für den Fall ausgewertet werden, dass anhand der Videodaten eine Aggression in Betracht kommt. Auf diese Weise wird der Überwachungsvorgang beschleunigt bzw. es wird Rechenkapazität eingespart. Als Signaturmodell für Aggression soll in diesem Zusammenhang eine modellhafte Aufzeichnung von Audiodaten eines bekannten Aggressionsphänomens, beispielsweise in Form eines charakteristischen Sonagramms verstanden werden.

In einer Variante des erfindungsgemäßen Verfahrens zum automatisierten Detektieren von aggressivem Verhalten in einem Überwachungsbereich erfolgt ein Vergleichen des Sonagramms der akustischen Informationen mit einem Signaturmodell für Aggression. Außerdem wird ein aggressives Verhalten für den Fall detektiert, dass in einem vorbestimmten minimalen Zeitintervall der Vergleich mit dem Signaturmodell und die Suche nach einem Muster schneller Bewegung in den Videodaten zeitgleich ein positives Ergebnis liefern. Bei dieser Variante wird eine zeitliche Koinzidenz des mit einer Aggression verbundenen akustischen Phänomens und des entsprechenden optischen Phänomens vorausgesetzt. Vorteilhaft wird die Zuverlässigkeit der Detektion erhöht, da eine enge zeitliche Korrelation zwischen einem positiven Ergebnis der Auswertung der akustischen Informationen und einem positiven Ergebnis der Auswertung der optischen Informationen ein das Auftreten eines entsprechenden Ereignisses sehr wahrscheinlich macht.

In einer Ausgestaltung des erfindungsgemäßen Verfahrens zum automatisierten Detektieren von aggressivem Verhalten in einem Überwachungsbereich umfasst das Durchsuchen der Videodaten nach einem Muster schneller Bewegung das Anwenden eines Hochpassfilters auf die Videodaten und das Anwenden eines Tiefpassfilters auf die gefilterten Videodaten.

Vorteilhaft werden mit Hilfe der genannten Filterprozedur langsame Bildvariationen sowie Rauscheffekte herausgefiltert, so dass eine Auswertung der Videodaten zuverlässiger und präziser wird.

In einer Variante des erfindungsgemäßen Verfahrens zum automatisierten Detektieren von aggressivem Verhalten in einem Überwachungsbereich werden die erfassten akustischen Daten vor dem Ermitteln, ob ein aggressives Verhalten vorliegt, einem Entrauschungsprozess unterworfen. Vorteilhaft werden Störsignale dabei herausgefiltert, die eine Auswertung der akustischen Daten beeinträchtigen könnten. Auf diese Weise wird die Analyse der akustischen Daten präziser und zuverlässiger.

In einer Variante des erfindungsgemäßen Verfahrens zum automatisierten Detektieren von aggressivem Verhalten in einem Überwachungsbereich werden bei einem positiven Ergebnis des automatisierten Ermittelns, ob ein aggressives Verhalten vorliegt, zugeordnete Bilddaten automatisiert markiert und an einen Sicherheitsexperten zur Begutachtung übermittelt. Vorteilhaft können die auf ein aggressives Verhalten hindeutenden Passagen der Videodaten von Experten überprüft werden, wodurch eine weiterverbesserte Zuverlässigkeit und Sicherheit bei der Aggressionsdetektion erreicht wird. Da die Experten nur "verdächtige" Videodaten überprüfen müssen, können Personalressourcen effektiver genutzt werden im Vergleich zu einer herkömmlichen Vorgehensweise, bei der das gesamte Videomaterial gesichtet werden muss.

Die Erfindung wird im Folgenden unter Hinweis auf die beigefügten Figuren anhand von Ausführungsbeispielen noch einmal näher erläutert. Es zeigen:
- FIG 1: ein Flussdiagramm, welches ein Verfahren zum automatisierten Detektieren von aggressivem Verhalten in einem Überwachungsbereich gemäß einem ersten Ausführungsbeispiel der Erfindung veranschaulicht,
- FIG 2: ein Flussdiagramm, welches ein Verfahren zum automatisierten Detektieren von aggressivem Verhalten in einem Überwachungsbereich gemäß einem zweiten Ausführungsbeispiel der Erfindung veranschaulicht,
- FIG 3: ein Blockdiagramm, welches ein Überwachungssystem gemäß einem Ausführungsbeispiel der Erfindung veranschaulicht.

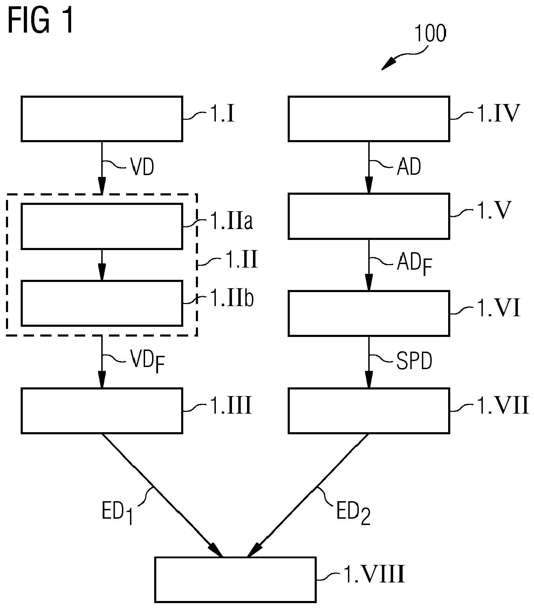

In FIG 1 ist ein Flussdiagramm 100 gezeigt, welches ein Verfahren zum automatisierten Detektieren von aggressivem Verhalten in einem Überwachungsbereich zeigt. Ein solcher Bereich kann zum Beispiel ein Zugabteil oder ein Fahrgastbereich eines Omnibusses darstellen. In dem Fahrgastbereich sind Videokameras und Mikrofone installiert. Bei dem Schritt 1.I erfolgt ein automatisiertes Erfassen von Videodaten VD von dem Überwachungsbereich. Die erfassten Videodaten VD werden bei dem Schritt 1.II für eine Detektion nach einem Muster schneller Bewegung vorbereitet. Dafür erfolgt bei dem Schritt 1.IIa eine Hochpassfilterung der Videodaten VD hinsichtlich des Zeitverhaltens der Pixel der Videodaten VD, wobei sich sehr langsam ändernde Komponenten in den Videodaten VD eliminiert werden. Bei dem Schritt 1.IIb erfolgt weiterhin eine Tiefpassfilterung, um Rauscheffekte herauszufiltern. Auf diese Weise verbleiben schnelle Intensitätsänderungen von Pixeln in Folge von schnellen Bewegungen in den Videodaten VD erhalten. Die gefilterten Videodaten VD_{F} werden bei dem Schritt 1.III einem Detektionsprozess zur Detektion von schneller Bewegung unterzogen, wobei zeitliche Änderungen der Pixelintensität ermittelt werden. Bei dem Detektionsprozess werden erste Ergebnisdaten ED₁ erzeugt. Bei dem Schritt 1.IV werden zusätzlich akustische Daten AD von dem Überwachungsbereich per Mikrofon aufgenommen. Der Schritt 1.IV kann zeitlich parallel bzw. gleichzeitig oder zumindest sehr zeitnah mit der Aufnahme der Videodaten erfolgen. Bei dem Schritt 1.V wird ein Hintergrundrauschen, welches zum Beispiel von Fahrgeräuschen eines Verkehrsmittels herrührt, herausgefiltert, wobei gefilterte Audiodaten AD_{F} erzeugt werden. Bei dem Schritt 1.VI werden aus den gefilterten Audiodaten AD_{F} Spektraldaten SPD extrahiert. Diese Spektraldaten werden bei dem Schritt 1.VII einem Vergleich mit einem Modell unterzogen, welches einem Spektrum einer Aggressionsszene entspricht, und es werden basierend auf dem Vergleich zweite Ergebnisdaten ED₂ erzeugt. Schließlich erfolgt bei dem Schritt 1.VIII ein automatisiertes Ermitteln, ob ein aggressives Verhalten vorliegt, auf Basis einer Kombination der ersten und zweiten Ergebnisdaten ED₁, ED₂. Als Hinweis auf eine Aggression kann zum Beispiel gedeutet werden, wenn beide Ergebnisdaten ED₁, ED₂ für eine Mindestanzahl von Frames bzw. in einem minimalen Zeitintervall gleichzeitig positiv sind.

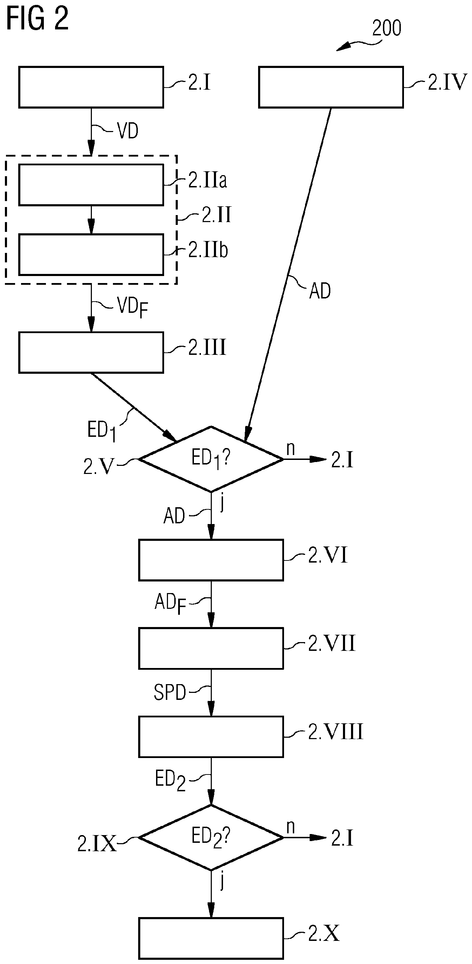

Alternativ kann eine Analyse der Audiodaten auch nur dann ausgeführt werden, wenn das Ergebnis der Videodaten positiv ausgefallen ist. Eine solche Vorgehensweise ist in FIG 2 veranschaulicht. Hier entsprechen die Schritte 2.I bis 2.IV den in FIG 1 gezeigten Schritten 1.I bis 1.IV. Dann erfolgt jedoch bei dem Schritt 2.V eine Auswertung der ersten Ergebnisdaten ED₁. Für den Fall, dass das Ergebnis positiv ist, also dass bei dem Schritt 2.V ermittelt wurde, dass eine Aggression vorliegt, was in FIG 2 mit "j" gekennzeichnet ist, so wird zu dem Schritt 2.VI übergegangen, wobei die Auswertung der Audiodaten AD erfolgt und zunächst ein Unterdrücken des Hintergrundrauschens, wie es bei dem Schritt 1.V in FIG 1 erfolgt, durchgeführt wird, wobei gefilterte Audiodaten AD_{F} erzeugt werden. Für den Fall, dass bei der Auswertung der ersten Ergebnisdaten ED₁ das Ergebnis negativ ist, was in FIG 2 mit "n" gekennzeichnet ist, so wird zurück zu dem Schritt 2.I zurückgegangen und erneut werden Videodaten VD und Audiodaten AD erfasst. Bei dem Schritt 2.VII werden aus den gefilterten Audiodaten AD_{F} Spektraldaten SPD extrahiert. Diese Spektraldaten werden bei dem Schritt 2.VIII einem Vergleich mit einem Modell unterzogen, welches einem Spektrum einer Aggressionsszene entspricht und es werden zweite Ergebnisdaten ED₂ erzeugt. Für den Fall, dass die Ergebnisdaten ED₂ positiv sind, wird bei dem Schritt 2.IX ermittelt, dass eine Aggression vorliegt, was in FIG 2 mit "j" gekennzeichnet ist und es wird zu dem Schritt 2.X übergegangen, bei dem ein Alarm ausgelöst wird, um Hilfe herbeizuholen. Für den Fall, dass bei dem Schritt 2.IX ermittelt wird, dass die zweiten Ergebnisdaten ED₂ ein negatives Ergebnis darstellen, was in FIG 2 mit "n" gekennzeichnet ist, so wird zu dem Schritt 2.I zurückgegangen und es werden neue Videodaten VD erfasst.

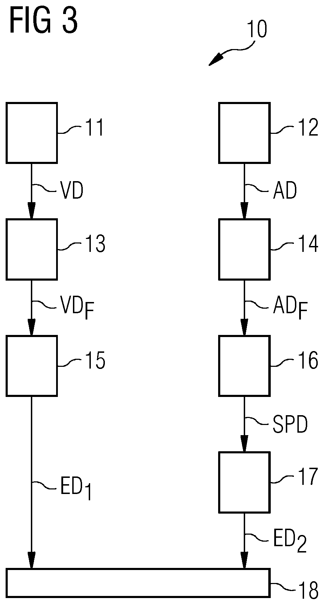

In FIG 3 ist ein Blockdiagramm gezeigt, welches ein Überwachungssystem 10 gemäß einem Ausführungsbeispiel der Erfindung veranschaulicht. Das Überwachungssystem umfasst eine Videokamera 11, welche dazu eingerichtet ist, Videodaten VD von einem Überwachungsbereich (nicht gezeigt) aufzunehmen, in dem sich Personen, zum Beispiel Fahrgäste, aufhalten. Die aufgenommenen Videodaten VD werden an eine Filtereinheit 13 übermittelt, die einen Hochpassfilter und einen Tiefpassfilter umfasst, um sowohl sich langsam ändernde Bildkomponenten als auch Rauscheffekte aus den Bildern zu entfernen und so gefilterte Videodaten VD_{F} zu erhalten. Die gefilterten Videodaten VD_{F} werden an eine Videodaten-Auswertungseinheit 15 übermittelt, welche anhand der gefilterten Videodaten VD_{F} ermittelt, ob eine Aggression auftritt oder nicht. Entsprechende erste Ergebnisdaten ED₁ werden an eine Ermittlungseinheit 18 übermittelt.

Das Überwachungssystem 10 umfasst zudem eine akustische Sensoreinheit 11 mit einem Tonaufnahmemikrofon, welches dazu dient, kontinuierlich akustische Messdaten AD von dem Überwachungsbereich aufzunehmen. Die akustischen Messdaten AD werden an eine Filtereinheit 14 übermittelt, die dazu eingerichtet ist, Hintergrundgeräusche, wie zum Beispiel Geräusche eines Fahrzeugs, zu unterdrücken. Die gefilterten akustischen Messdaten AD_{F} werden an eine Spektrum-Extraktionseinheit 16 übermittelt, welche Spektraldaten SPD extrahiert. Die Spektraldaten SPD werden an eine Audiodaten-Auswertungseinheit 17 übermittelt, welche die Spektraldaten SPD mit einem Aggressionsmodell vergleicht. Die bei dem Auswertungsprozess erzeugten zweiten Ergebnisdaten ED₂ werden ebenfalls an die Ermittlungseinheit 18 übermittelt. Dort erfolgt für den Fall, dass beide Ergebnisdaten ED₁, ED₂, für eine Mindestzeitdauer gleichzeitig ein positives Ergebnis aufweisen, eine Auswertung dahingehend, dass eine Aggression vorliegt. Für den Fall, dass das genannte Kriterium nicht erfüllt ist, d.h., dass mindestens eines der beiden Ergebnisse ED₁, ED₂ negativ ausfällt, wird seitens der Ermittlungseinheit 18 angenommen, dass keine Aggression aufgetreten ist.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Verfahren zum automatisierten Detektieren von aggressivem Verhalten in einem Überwachungsbereich, aufweisend die Schritte:
- automatisiertes Erfassen von Videodaten (VD) von dem Überwachungsbereich,
- Durchsuchen der Videodaten (VD) nach einem Muster schneller Bewegung,
- automatisiertes Erfassen von akustischen Informationen (AD) von dem Überwachungsbereich,
- automatisiertes Ermitteln, ob ein aggressives Verhalten vorliegt, auf Basis einer Kombination eines Vergleichsergebnisses (ED₂) der akustischen Informationen und eines Ergebnisses (ED₁) der Musterdetektion in den Videodaten (VD), wobei ein Frequenzbereich (SPD) des Frequenzspektrums der Audiodaten (AD) extrahiert und mit einem Signaturmodell für aggressives Verhalten verglichen wird.

2. Verfahren nach Anspruch 1, wobei das automatisierte Ermitteln, ob ein aggressives Verhalten vorliegt, die Schritte umfasst:
- für den Fall, dass in den Videodaten (VD) ein Muster schneller Bewegung gefunden wurde, Vergleichen des Sonagramms (SPD) der akustischen Informationen (AD) mit einem Signaturmodell für Aggression,
- Detektieren eines aggressiven Verhaltens, für den Fall, dass der Vergleich des Sonagramms (SPD) mit dem Signaturmodell ein positives Ergebnis (ED₂) aufweist.

3. Verfahren nach Anspruch 1, wobei ein Vergleichen des Sonagramms (SPD) der akustischen Informationen (AD) mit einem Signaturmodell für Aggression erfolgt und ein aggressives Verhaltens für den Fall detektiert wird, dass in einem vorbestimmten minimalen Zeitintervall der Vergleich mit dem Signaturmodell und die Suche nach einem Muster schneller Bewegung in den Videodaten (VD) zeitgleich ein positives Ergebnis (ED₁, ED₂) liefern.

4. Verfahren nach einem der vorstehenden Ansprüche, wobei das Durchsuchen der Videodaten (VD) nach einem Muster schneller Bewegung umfasst:
- Anwenden eines Hochpassfilters auf die Videodaten (VD),
- Anwenden eines Tiefpassfilters auf die gefilterten Videodaten (VD).

5. Verfahren nach einem der vorstehenden Ansprüche, wobei die erfassten akustischen Daten (AD) vor dem Ermitteln, ob ein aggressives Verhalten vorliegt, einem Entrauschungsprozess unterworfen werden.

6. Verfahren nach einem der vorstehenden Ansprüche, wobei
- einem positiven Ergebnis des automatisierten Ermittelns, ob ein aggressives Verhalten vorliegt, zugeordnete Videodaten (VD) automatisiert markiert werden und
- an Sicherheitsexperten zur Begutachtung übermittelt werden.

7. Alarmierungsverfahren, aufweisend die Schritte:
- Durchführen des Verfahrens nach einem der vorstehenden Ansprüche,
- automatisiertes Auslösen eines Alarms für den Fall, dass eine Notsituation detektiert wurde.

8. Überwachungssystem (10), aufweisend:
- eine Videoaufnahmeeinheit (11) zum automatisierten Erfassen von Videodaten (VD) von dem Überwachungsbereich,
- eine Sucheinheit (15) zum Durchsuchen der Videodaten (VD) nach einem Muster schneller Bewegung,
- eine akustische Sensoreinheit (12) zum automatisierten Erfassen von akustischen Informationen (AD) von dem Überwachungsbereich,
- eine Ermittlungseinheit (18) zum automatisierten Ermitteln, ob ein aggressives Verhalten vorliegt, auf Basis einer Kombination eines Vergleichsergebnisses (ED₂) der akustischen Informationen (AD), wobei ein Frequenzbereich (SPD) des Frequenzspektrums der Audiodaten (AD) extrahiert und mit einem Signaturmodell für aggressives Verhalten verglichen wird, und des Ergebnisses (ED₁) der Musterdetektion in den Videodaten (VD).

9. Alarmsystem, aufweisend:
- ein Überwachungssystem (10) nach Anspruch 8 und
- eine Alarmierungseinheit zum automatisierten Auslösen eines Alarms in Abhängigkeit von einem von dem Überwachungssystem (10) detektierten aggressiven Verhalten.

10. Computerprogrammprodukt mit einem Computerprogramm, welches direkt in eine Speichereinheit einer Rechnereinheit eines Überwachungssystems (10) ladbar ist, mit Programmabschnitten, um alle Schritte eines Verfahrens nach einem der Ansprüche 1 bis 7 auszuführen, wenn das Computerprogramm in der Rechnereinheit ausgeführt wird.

11. Computerlesbares Medium, auf welchem von einer Rechnereinheit ausführbare Programmabschnitte gespeichert sind, um alle Schritte des Verfahrens nach einem der Ansprüche 1 bis 7 auszuführen, wenn die Programmabschnitte von der Rechnereinheit ausgeführt werden.
